# EUROPEAN PATENT APPLICATION

(11) **EP 3 677 381 A2**
(43) Date of publication of application: **08.07.2020**
(21) Application number: 19214386.5
(22) Date of filing: 09.12.2019
(51) Int. Cl.: B24D 3/06, B24D 3/28, B24D 18/00

(54) **ABRASIVE MEDIA**

(30) Priority: 07.01.2019 GB 201900160
(71) Applicant: Rolls-Royce plc, London N1 9FX (GB)
(72) Inventor: Yeo, Swee Hock, Derby, Derbyshire DE24 8BJ (GB); Wee, Arthur, Derby, Derbyshire DE24 8BJ (GB); Santhanam, Vijay, Derby, Derbyshire DE24 8BJ (GB); Khadka, Indira, Derby, Derbyshire DE24 8BJ (GB)
(74) Representative: Rolls-Royce plc

(57) **Abstract**

A method of manufacturing an abrasive media article, the method comprising the steps of: preparing an abrasive media composition comprising a binder material and ceramic based abrasive particles, wherein the binder material comprises an expoy resin, wherein the particles form 50-90% by mass of the composition, and wherein the particles have an average size in the range of 5 µm to 15 µm; casting the composition into a mold; curing the composition in the mold; and removing the cured composition from the mold.

## Description

The disclosure relates to an abrasive media composition, a method of manufacturing an abrasive media article, an abrasive media article, and the use of an abrasive media article in the surface finishing of components.

### Background

Components of an aircraft engine such as a gas turbine engine can be made from metal, such as an aluminium alloy or a titanium alloy. The surfaces of such components need to be finished (e.g. smoothed and/or cleaned).

It is known to use plastic media for the surface finishing of metal components using a mass finishing process. It is known for such plastic media to comprise polyester resin based binder materials. It is known to use abrasives in the media that are either organic based (e.g. walnut shells or coconut fibres) or ceramic based.

GB 1,163,739 discloses tumbling media formed of abrasive particles and binding materials.

The media made by known processes tend to be too porous. The other mechanical properties of the known media are often poor. The process of finishing a surface using the known media is particularly time consuming.

It is an aim of the present disclosure to provide abrasive media with improved mechanical properties (e.g. more robust) and/or which can reduce the time consumed in performing a finishing process to a desired standard.

### Brief Summary

According to a first aspect of the disclosure there is provided an abrasive media composition comprising: a binder material comprising an epoxy resin or a polyester resin; and ceramic based abrasive particles; wherein the particles form 50-90% by mass of the composition, and wherein the particles have an average size in the range of from 5 µm to 25 µm.

In an arrangement, the binder material comprises an epoxy resin. The epoxy resin may comprise Oxirane, 2,2'-((1-methylethylidene)bis(4,1-phenyleneoxymethylene))bis-, homopolymer.

In an arrangement, the binder material comprises a hardener in addition to the epoxy resin, wherein the hardener is different from the epoxy resin. The hardener may comprise polyoxypropylenediamine.

In an arrangement, the particles are formed of at least one of aluminium oxide, silicon carbide, boron carbide and zirconium carbide. In an arrangement, the particles are formed of at least one of aluminium oxide and silicon carbide. In an arrangement, the particles comprise particles formed of aluminium oxide.

In an arrangement, the particles form 50-75%, 60-75% or 65-70%by mass of the composition. In an arrangement, the particles form 55-70% by mass of the composition.

In an arrangement, the particles have an average size in the range of from 5 µm to 15 µm, 5 µm to 10µm, perhaps about 9µm or 10µm.

According to a second aspect of the disclosure there is provided a method of manufacturing an abrasive media article, the method comprising the steps of:
preparing an abrasive media composition comprising a binder material and ceramic based abrasive particles, wherein the particles form 50-90% by mass of the composition, and wherein the particles have an average size in the range of 5 µm to 25 µm;
casting the composition into a mold;
curing the composition in the mold; and
removing the cured composition from the mold.

In an arrangement, the binder comprises an epoxy resin. The particles may have an average size in the range of 5 to 15 µm.

In an arrangement, the method comprises vibrating the removed cured composition in a liquid. The liquid may be water. The composition may be vibrated for at least about 2 hours. The composition may be vibrated at a frequency in the range of from 2,500Hz to 3,500Hz, perhaps about 3,000Hz.

In an arrangement, the method comprises degassing the composition before casting it into the mold. In an arrangement, the composition is degassed at a pressure in the range from 3 kPa to 4 kPa. The composition may be degassed for at least about 10 minutes.

In an arrangement, the composition in the mold is cured at a temperature in the range of from 25°C to 150°C. In an arrangement, the composition in the mold is cured at a temperature in the range of from 125°C to 175°C, perhaps about 150 °C. In an arrangement, the composition in the mold is cured for at least 24 hours.

In an arrangement, the step of preparing comprises mixing the binder material with the particles in a mixer at 2,000 to 3,000 revolutions per minute.

According to a third aspect of the disclosure there is provided an abrasive media article comprising ceramic based particles within a binder material that comprises epoxy resin or a polyester resin, wherein the particles form 50-90% by mass of the article, and wherein the particles have an average size in the range of 5 µm to 25 µm.

In an arrangement, the binder comprises an epoxy resin. The particles may have an average size of in the range of 5 µm to 15 µm.

In an arrangement, the article has a porosity of at most 2%, optionally at most 1% and optionally at most 0.5%. In an arrangement, the article has a Shore D hardness of at least 85 and optionally at least 89.

In an arrangement, the article has a shape of a cone, a pyramid, a paraboloid, a sphere, a cylinder, an angle cut cylinder or a tristar pyramid.

According to a fourth aspect of the disclosure there is provided the use of the abrasive media in the surface finishing (for example vibratory surface finishing) of a component. The component may be a component of a gas turbine engine, such as a fan blade. The component may be a titanium or aluminium based component, for example a titanium alloy or aluminium alloy based component. In one specific arrangement, the component is a titanium alloy fan blade.

### Brief Description of the Drawings

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a flow diagram showing steps of a method of manufacturing an abrasive media article according to the disclosure;
Figure 5 shows molds filled with an abrasive media composition according to the disclosure;
Figure 6 shows abrasive media articles according to the disclosure;
Figure 7 is a graph showing the relationship between concentration of abrasive particles and track depth;
Figure 8 is a graph showing the relationship between concentration of abrasive particles and track width;
Figure 9 is a graph showing the relationship between concentration of abrasive particles and material removal; and
Figure 10 is a graph showing the relationship between how long a finishing process is performed and roughness of the surface being finished for different types of media articles.

### Detailed Description

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

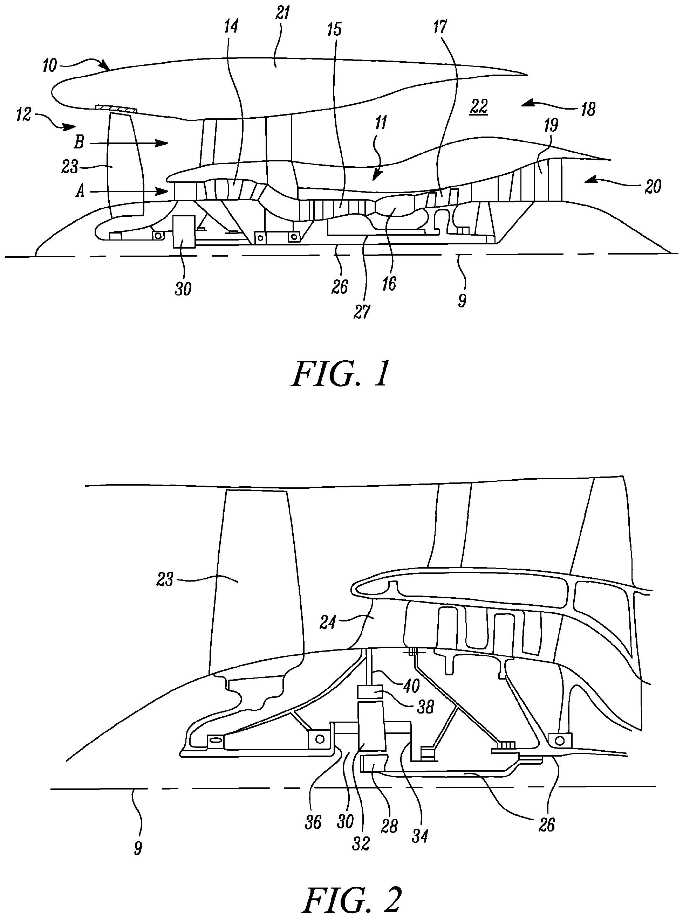

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

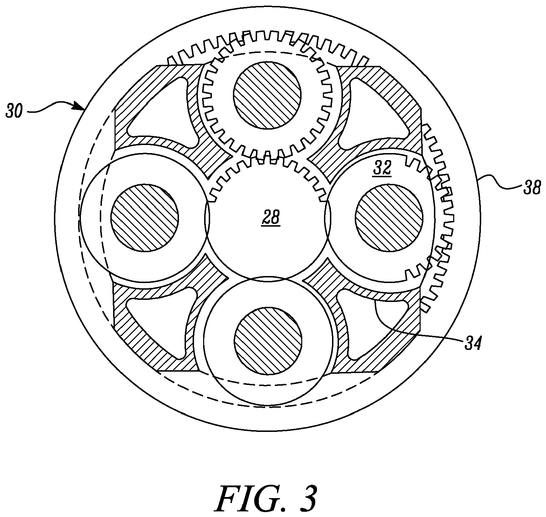

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the disclosure. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Components of the gas turbine engine 10 can be made from metal, such as an aluminium alloy or a titanium alloy. The surfaces of such components need to be finished (e.g. smoothed and/or cleaned). For example, the surfaces of the blades of the fan 23 are finished using abrasive media.

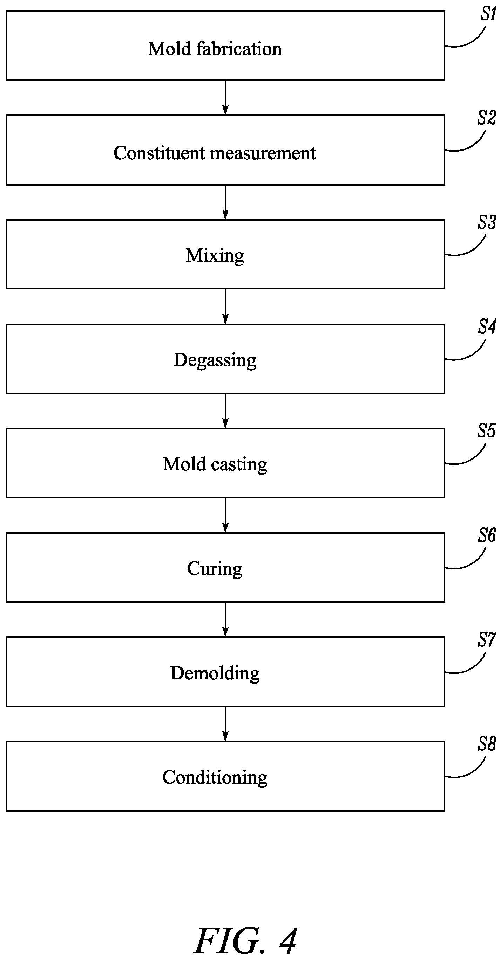

Figure 4 is a flow diagram showing the steps of a method of manufacturing an abrasive media article 70. Some of the steps can be omitted.

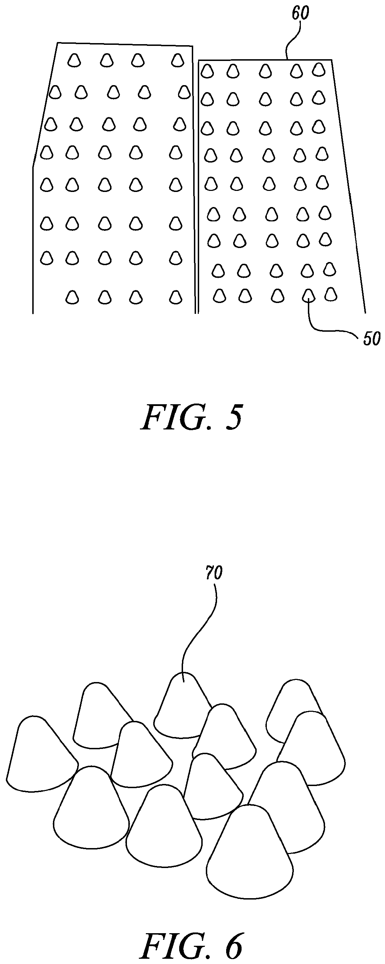

As shown in Figure 4, in an arrangement the method comprises the step of mold fabrication S1. The mold fabrication step S1 is for fabricating a mold 60. Such molds 60 are shown in Figure 5, for example.

It is not necessary for the step of mold fabrication S1 to be part of the method. For example, molds that have previously been fabricated and possibly previously used in the manufacture of other batches of articles may be used.

As shown in Figure 5, in an arrangement each mold 60 corresponds to a plurality of abrasive media articles 70. In an arrangement, the molds 60 are made of silicone. However, other materials can be used for making the molds 60. Materials that have some elasticity can make it easier to remove the articles 70 from the mold 60.

The mold 60 defines the shape of the abrasive media article 70. Figure 6 shows a group of manufactured articles 70. As shown in Figure 6, in an arrangement the article 70 has a cone shape. However, other shapes are possible. The shape of the article 70 is not particularly limited. Merely by way of example, the article 70 may have a shape of a pyramid, a paraboloid, a sphere, a cylinder, an angle cut cylinder or a tristar pyramid.

As shown in Figure 4, in an arrangement the method comprises the step of constituent measurement S2. The step of constituent measurement S2 comprises measuring the relative amounts of the different constituents that form the article 70. This is part of preparing an abrasive media composition 50 that is used to make the articles 70.

In an arrangement, the abrasive media composition 50 comprises a binder material and ceramic based abrasive particles. In an arrangement, the abrasive media composition 50 consists of the binder material and the ceramic based abrasive particles.

The binder material may be any material suitable for binding the ceramic based abrasive particles together. For example, the binder material may comprise an epoxy resin. Different types of epoxy resin can be used, for example oxirane, 2,2'-((1-methylethylidene)bis(4,1-phenyleneoxymethylene))bis-, homopolymer.

In an arrangement, the binder material comprises a hardener in addition to the epoxy resin. The hardener is different from the epoxy resin. The hardener is configured to increase hardness of the articles 70 manufactured by the method. Merely by way of example, one possible hardener is polyoxypropylenediamine.

In an arrangement, the binder material has a compressive strength of 60 to 70 MPa. In an arrangement, the binder material has a tensile strength of 40 to 50 MPa. In an arrangement, the binder material has a compressive modulus of 600 to 700 MPa. In an arrangement, the binder material has a tensile modulus of 3000 to 4000 MPa. In an arrangement, the binder material has a Shore D hardness of 80 to 90. In an arrangement, the binder material has a mixed viscosity of 150 to 250 MPa s.

As mentioned above, in an arrangement the abrasive media composition 50 comprises ceramic based abrasive particles. The type of ceramic based abrasive particle is not particularly limited. Possible ceramic based abrasive particles that have been found to provide particularly good performance include aluminium oxide, silicon carbide, boron carbide and zirconium carbide. Aluminium oxide and silicon carbide, especially aluminium oxide, may be particularly preferred.

In an arrangement, the particles have an average size of at most 25 µm. Tribological studies performed by the inventors have shown that low particle sizes (i.e. no more than 25 µm) provide a better surface finish. In an arrangement, the particles have an average size of at most 15 µm. This further improves the surface finish.

In order to determine the average size of the particles, a sieve test may be performed.

After the abrasive media article 70 is formed, the average size of the particles may be determined by the following means. The abrasive media article 70 is cut to provide a flat surface having a size of at least about 10 mm x 10 mm. The flat surface is viewed using, for example a SEM. The size of the grains can then be measured. The smallest 30% of particles visible at the flat surface are ignored because they may correspond to particles in orientations that make them appear smaller than they actually are. From the remaining particles, a sample of 30 particles may be taken. For each particle in the sample, the longest distance between two edges is determined and measured. The average size of the particles is determined to be the mean of these 30 measurements. The measurements may be performed using suitable microscope equipment.

In an arrangement, the particles have an average size of at least 5 µm. By providing that the particles have an average size of at least 5 µm, the abrasive media articles 70 are sufficiently abrasive. The may preferably have an average size in the range of 5 to 15 µm or 5 to 10 µm, and in one arrangement have average size of about 9 to 10 µm

The step of constituent measurement S2 may comprise measuring the relative masses of binder material and abrasive particles to be used to form the abrasive media composition 50.

In an arrangement, the ceramic based abrasive particles form at least 50 percent by mass of the composition 50. This increases material removal at the surface of the component (e.g. fan blade) that is to be finished. In particular, by providing that the particles form at least 50 percent by mass of the composition 50, the width and depth of tracks in the surface formed by the abrasive media articles 70 is found to be increased.

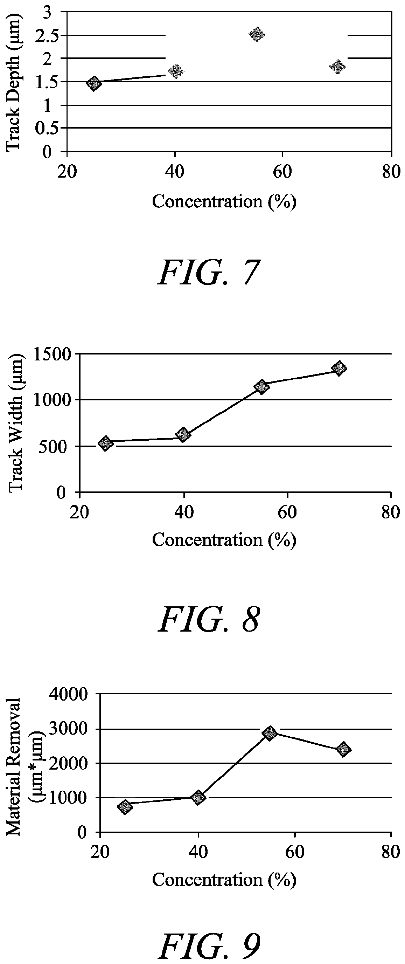

Figure 7 is a graph showing the relationship between concentration of particles as a percentage by mass of the composition 50 and the track depth. As shown in Figure 7, the track depth increases when the concentration of particles is at least 50%.

Figure 8 is a graph showing the relationship between concentration of the particles in the composition 50 and the track width. As shown in Figure 8, the track width increases when the concentration of particles is at least 50%.

Figure 9 is a graph showing the relationship between the concentration of particles in the composition 50 and the amount of material removal. The values of the material removal shown in Figure 9 are the products of the values for the track depth and the track width shown in Figures 7 and 8, respectively. Figure 9 is indicative of the overall amount of material removal for a given concentration of particles in the composition 50. As shown in Figure 9, the material removal is increased when the concentration of particles is at least 50%.

In an arrangement, the particles form at most 90% by mass of the composition 50. As shown in Figure 7, the track depth decreases for very high levels of concentration of the particles in the composition 50. Figure 9 further shows that the material removal decreases for higher levels of concentration. By providing that the particles form at most 90 percent by mass of the composition 50, the material removal remains high.

In an arrangement, the particles form at least 55 percent by mass of the composition 50. In an arrangement, the particles form at most 70 to 75 percent by mass of the composition 50. As shown in Figure 9, the highest material removal is achieved for concentrations between 55 to 70 percent by mass of the particles in the composition 50. Material removal remains high over 60 percent by mass, and concentrations between 60-75% by mass, perhaps 65-70% by mass, may provide a particularly good combination of properties.

As shown in Figure 4, in an arrangement the method comprises the step of mixing S3. The step of mixing S3 is for mixing the binder material together with the ceramic based abrasive particles to form the abrasive media composition 50. In an arrangement, the binder material and the particles are mixed together in a planetary mixer.

In an arrangement, the constituents of the composition 50 are mixed for at least 5 minutes. In an arrangement, the mixing is performed for at most 15 minutes. The step of mixing S3 is part of the step of preparing the abrasive media composition 50.

In an arrangement, the binder material is mixed with the particles at 2000 to 3000 revolutions per minute. The step of mixing S3 is for providing a homogeneous mixture of the abrasive and resin.

As shown in Figure 4, in an arrangement the method comprises the step of degassing S4. In an arrangement, the composition 50 is degassed in a vacuum chamber. The composition 50 may be degassed for at least 5 minutes, perhaps about 10 minutes. The composition 50 may be degassed for at most 15 minutes. In an arrangement, the composition 50 is degassed at a pressure in the range of from 3 kPa to 4 kPa. The step of degassing S4 is optional.

As shown in Figure 4, in an arrangement the method comprises the step of mold casting S5. The step of mold casting S5 is for casting the composition 50 into the mold 60. Figure 5 shows portions of the composition 50 cast into the mold 60.

As shown in Figure 4, in an arrangement the method comprises the step of curing S6. The step of curing S6 is for curing the composition 50 in the mold 60. In an arrangement, the composition 50 in the mold 60 is cured at a temperature of at least 25°C. In an arrangement, the composition 50 is cured in the mold 60 at a temperature of at least 125 °C and at most 175 °C, perhaps at most 150°C. In an arrangement, the composition 50 is cured in the mold 60 for at least 20 hours, for example, at least 24 hours.

As shown in Figure 4, in an arrangement the method comprises the step of demolding S7. The step of demolding S7 is for removing the cured composition from the mold 60. Figure 6 shows abrasive media articles 70 that have been removed from the mold 60.

As shown in Figure 4, in an arrangement the method comprises the step of conditioning S8. The step of conditioning S8 may comprise vibrating the removed cured composition in a liquid. For example, the articles may be vibrated in a vibratory bowl. The liquid may be a conditioning compound for conditioning the outer surface of the pieces of cured composition which form the articles 70, for example to remove sharp edges and burrs. The liquid may be water. The cured composition may be vibrated at a frequency in the range of from 2,500Hz to 3,500Hz, perhaps about 3,000Hz. The cured composition may be vibrated for about 2 hours. The step of conditioning S8 is optional.

A specific example of the abrasive media articles 70 according to the present disclosure is provided below. The composition 50 consisted of a clear epoxy as the binder material and aluminium oxide abrasive powder as the ceramic based abrasive particles. The powder had an average particle size of 9 µm. The molds 60 used corresponded to a conical shape with a cone base of about 20 mm diameter. The molds 60 were made of silicone for flexibility. Alternatively, the molds 60 may be made of steel, or glass fiber with a gel coat, for example.

The binder material formed 30 percent by mass of the composition 50. The ceramic based abrasive particles formed 70 percent by mass of the composition 50. The binder material and the particles were mixed using a planetary mixer.

The composition 50 was degassed for 10 minutes followed by 24 hours of curing at room temperature. In order to test the effectiveness of the abrasive media articles 70, they were applied to surface finishing of titanium materials.

The physical properties of the abrasive media articles 70 made according to the above example were compared to two known (commercially available) types of abrasive media article called RKH/4 and V2030. The example of the disclosure made according to the specification mentioned above will be referred to as E0970.

The porosity of the articles 70 according to the example of the disclosure was found to be lower than the porosity in the two known media types. Specifically, the example of the disclosure was found to have a porosity of 0.32%, compared to 4.56% for RKH/4 and 5.94% for V2030.

Although the porosity for this specific example of the disclosure was 0.32%, other porosity values are possible. In particular, in an arrangement the article 70 has a porosity of at most 2%, optionally at most 1% and optionally at most 0.5%. In an arrangement the article 70 has a porosity of at least 0.5%.

A lower porosity in the media shows better quality of fabrication and results in fewer undesirable micro-air voids present in the final product. This improves its self-wear resistance. The self-wear of the articles 70 is defined as the media loss in weight after use. Lower media wear results in less use of consumables over time.

In order to measure the self-wear resistance of the articles 70, the mass of the media was weighed before and after use. The self-wear percentage is defined as the percentage of the mass of the articles before use that is loss during use. The present disclosure was found to have greater self-wear resistance (i.e. lower self-wear percentage) compared to the two known media types. In particular, the self-wear percentage for the example of the disclosure was found to be 1.39%, compared to 2.7% for RKH/4 and 1.51% for V2030.

The media articles 70 of the present disclosure show better resistance to media self-wear compared to the conventional media during vibratory finishing processes.

The hardness of the articles 70 of the example of the disclosure was found to be similar to conventional media. Specifically, the articles 70 according to the example of the disclosure were found to have a Shore D hardness of 89.8, compared to a Shore D hardness of 91.3 for RKH/4 and a Shore D hardness of 92.6 for V2030.

Although the specific example of the disclosure described here had a Shore D hardness of 89.8, other values of hardness are possible. For example, in an arrangement the articles 70 have a Shore D hardness of at least 85, or optionally at least 89.

Additionally, the media of the present disclosure were found to show ductile properties with a high load bearing capacity. In particular, the media of the present disclosure were found to be more ductile compared to RKH/4 or V2030. The ductile properties help to prevent undesirable chipping of the articles 70 during the process of surface finishing. This reduces media replacement costs.

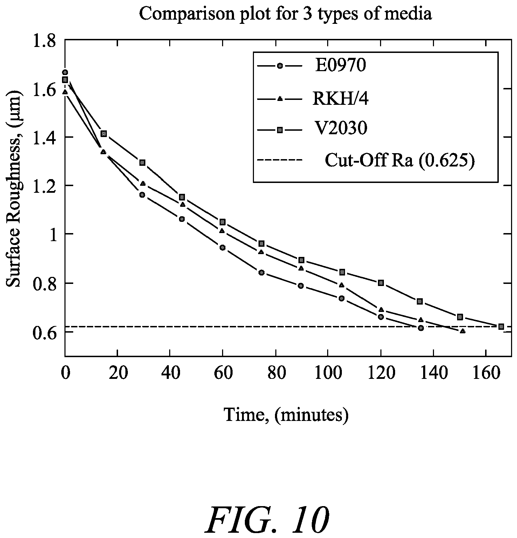

Figure 10 is a graph showing the relationship between the time taken during a surface finishing process and the roughness of the surface that is being finished, for different types of media. In particular, the example of the disclosure (E0970) is compared to the known media of RHK/4 and V2030.

As shown in Figure 10, the media of the disclosure reduces roughness of the surface more quickly compared to the two types of known media. The present disclosure is expected to achieve an improvement in process cycle time compared to conventional media.

Figure 10 shows a cut-off Ra of 0.625 (i.e. a desired level of smoothness). Figure 10 shows that if a certain level of smoothness of the surface is required, then the media of the present disclosure can achieve that smoothness more quickly compared to the conventional media.

For example, the process cycle time for the disclosure was found to be 137.3 minutes, compared to 151 minutes for RKH/4 and 164.4 minutes for V2030. For these trials, the media articles 70 were used to finish the surface of a titanium component in a vibratory bowl.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An abrasive media composition (50) comprising:
a binder material comprising an epoxy resin; and
ceramic based abrasive particles,
wherein the particles form 50-90% by mass of the composition, and
wherein the particles have an average size in the range of from 5 µm to 15 µm.

2. The composition of Claim 1, wherein the particles form 50-75% by mass of the composition, optionally 60-75%, optionally 65-70%.

3. The composition of any one of the preceding claims, wherein the particles have an average size in the range of from 5 µm to 10 µm, optionally wherein the particles have an average size of about 10 µm.

4. The composition of any one of the preceding claims, wherein the epoxy resin comprises Oxirane, 2,2'-((1-methylethylidene)bis(4,1-phenyleneoxymethylene))bis-, homopolymer.

5. The composition of any one of the preceding claims, wherein the binder material comprises a hardener in addition to the epoxy resin, wherein the hardener is different from the epoxy resin, and optionally wherein the hardener comprises polyoxypropylenediamine.

6. The composition of any one of the preceding claims, wherein the abrasive particles comprise particles formed of at least one of aluminium oxide, silicon carbide, boron carbide and zirconium carbide, optionally wherein the abrasive particles comprise particles formed of at least one of aluminium oxide and silicon carbide, optionally wherein the abrasive particles comprise particles formed of aluminium oxide.

7. A method of manufacturing an abrasive media article (70), the method comprising the steps of:
preparing (S2-S3) an abrasive media composition (50) comprising a binder material and ceramic based abrasive particles, wherein the binder material comprises an epoxy resin, wherein the particles form 50-90% by mass of the composition, and wherein the particles have an average size in the range of 5 µm to 15 µm;
casting (S5) the composition into a mold (60);
curing (S6) the composition in the mold; and
removing (S7) the cured composition from the mold.

8. The method of Claim 7, comprising vibrating (S8) the removed cured composition in a liquid, optionally wherein:
the liquid is water; and/or
the composition is vibrated for at least 2 hours; and/or
the composition is vibrated at a frequency in the range of from 2,500Hz to 3,500Hz, preferably at a frequency of about 3,000Hz.

9. The method of Claim 7 or Claim 8, comprising degassing (S4) the composition before casting it into the mold, optionally wherein:
the composition is degassed at a pressure in the range from 3 kPa to 4 kPa; and/or
the composition is degassed for at least about 10 minutes.

10. The method of any one of Claims 7 to 9, wherein the composition in the mold is cured at a temperature in the range of from 125°C to 175°C, preferably at a temperature of about 150°C.

11. The method of any one of Claims 7 to 10, wherein the composition in the mold is cured for at least 24 hours and/or the step of preparing comprises mixing (S3) the binder material with the particles in a mixer at 2,000 to 3,000 revolutions per minute.

12. An abrasive media article (70) comprising:
ceramic based particles within a binder material that comprises epoxy resin, wherein the particles form 50-90% by mass of the article, and wherein the particles have an average size in the range of 5 µm to 15 µm.

13. The article of Claim 12, having:
a porosity of at most 2%, optionally at most 1% and optionally at most 0.5%; and/or
a Shore D hardness of at least 85 and optionally at least 89.

14. The article of Claims 12 or Claim 13, having a shape of a cone, a pyramid, a paraboloid, a sphere, a cylinder, an angle cut cylinder or a tristar pyramid.

15. Use of an abrasive media article (70) according to any one of claims 12 to 14 in surface finishing of a titanium or aluminium based component.
